(19) Europäisches Patentamt
European Patent Office
Office européen des brevets

(11) **EP 1 247 452 A2**

(12) **EUROPÄISCHE PATENTANMELDUNG**

(43) Veröffentlichungstag:
**09.10.2002 Patentblatt 2002/41**

(51) Int Cl.[7]: **A01N 43/42**
// (A01N43/42, 47:14, 47:12, 47:04, 43:90, 43:88, 43:653, 37:24)

(21) Anmeldenummer: **02014967.0**

(22) Anmeldetag: **07.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.07.1999 DE 19933938**

(62) Dokumentnummer(n) der früheren Anmeldung(en) nach Art. 76 EPÜ:
**00945897.7 / 1 202 627**

(71) Anmelder: **Bayer Aktiengesellschaft**
**51368 Leverkusen (DE)**

(72) Erfinder:
- **Dutzmann, Stefan, Dr.**
  **40764 Langenfeld (DE)**
- **Stenzel, Klaus, Dr.**
  **40595 D-sseldorf (DE)**
- **Mauler-Machnik, Astrid, Dr.**
  **42799 Leichlingen (DE)**
- **Wachendorff-Neumann, Ulrike, Dr.**
  **56566 Neuwied (DE)**

Bemerkungen:
Diese Anmeldung ist am 10 - 07 - 2002 als Teilanmeldung zu der unter INID-Kode 62 erwähnten Anmeldung eingereicht worden.

(54) **Fungizide Wirkstoffkombinationen**

(57) Die neuen Wirkstoffkombinationen aus 5,7-Dichlor-4-(4-fluor-phenoxy)-chinolin der Formel

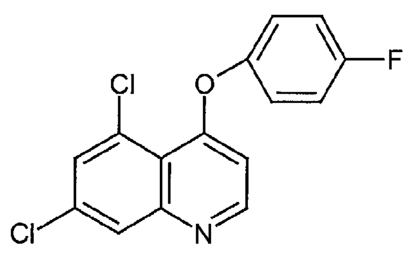

(I)

und den in der Beschreibung aufgeführten Wirkstoffen der Gruppen (2) bis (8) besitzen sehr gute fungizide Eigenschaften.

EP 1 247 452 A2

## Beschreibung

Die vorliegende Erfindung betrifft neue Wirkstoffkombinationen, die aus dem bekannten 5,7-Dichlor-4-(4-fluor-phenoxy)-chinolin einerseits und weiteren bekannten fungiziden Wirkstoffen andererseits bestehen und sehr gut zur Bekämpfung von phytopathogenen Pilzen geeignet sind.

Es ist bereits bekannt, dass 5,7-Dichlor-4-(4-fluor-phenoxy)-chinolin fungizide Eigenschaften besitzt (vgl. EP-A 0 326 330). Die Wirksamkeit dieses Stoffes ist gut, lässt aber bei niedrigen Aufwandmengen in manchen Fällen zu wünschen übrig.

Ferner ist schon bekannt, dass bestimmte Kombinationen von 5,7-Dichlor-4-(4-fluorphenoxy)-chinolin mit anderen bekannten fungiziden Wirkstoffen zur Bekämpfung von Pilzen eingesetzt werden können (vgl. EP-A 0 326 330, WO 96/18 299 und WO 98/51 146). Auch die Wirkung dieser Mischungen ist aber nicht immer befriedigend.

Es wurde nun gefunden, dass die neuen Wirkstoffkombinationen aus

5,7-Dichlor-4-(4-fluor-phenoxy)-chinolin der Formel

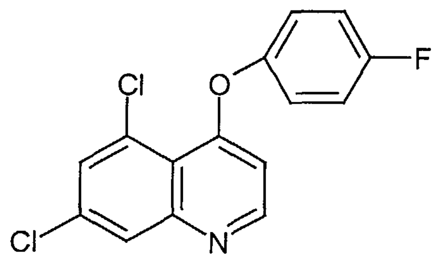

(I)

(Quinoxyfen)

und

(2) dem N-Dichlor-fluor-methylthio-N',N'-dimethyl-N-p-tolylsulfamid der Formel

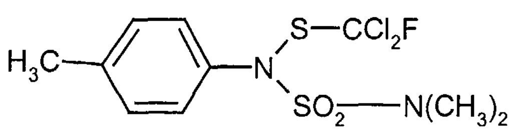

(III)

(Tolylfluanid)

oder

(3) dem Zink-propylen-1,2-bis-(dithiocarbamidat) der Formel

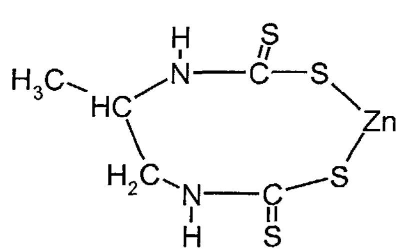

(IV)

(Propineb)

oder

(4) dem Anilin-Derivat der Formel

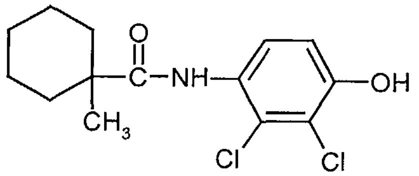

(V)

(Fenhexamid)

oder

(5) der Verbindung der Formel

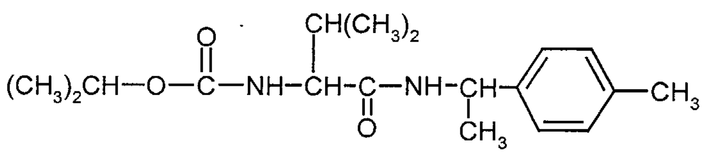

(VI)

(Iprovalicarb)

oder

(6) dem 2-[2-(1-Chlorcyclopropyl)-3-(2-chlorphenyl)-2-hydroxypropyl]-2,4-dihydro-[1,2,4]-triazol-3-thion der Formel

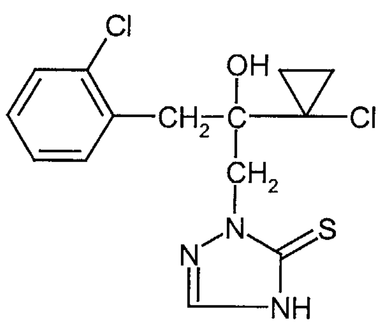

(VII)

oder

(7) der Verbindung der Formel

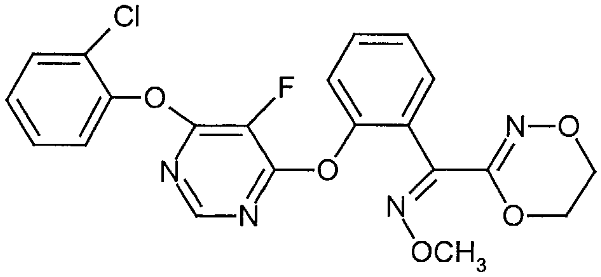

(VIII)

oder

(8) dem Benzimidazol-Derivat der Formel

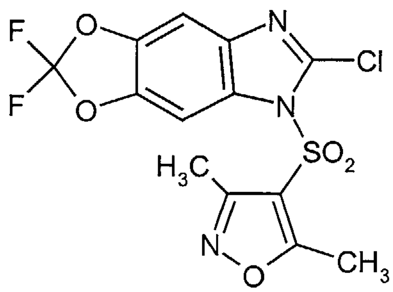

(IX)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Das 5,7-Dichlor-4-(4-fluor-phenoxy)-chinolin der Formel (I) ist bekannt (vgl. EP-A 0 326 330).

Das 2-[2-(1-Chlorcyclopropyl)-3-(2-chlorphenyl)-2-hydroxypropyl]-2,4-dihydro-[1,2,4]-triazol-3-thion kann in der "Thiono"-Form der Formel

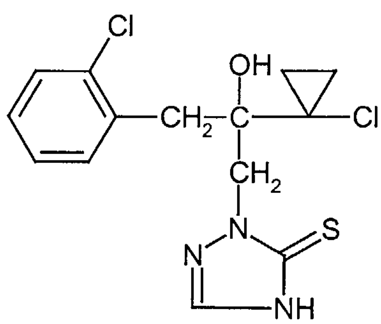

(VII)

oder in der tautomeren "Mercapto"-Form der Formel

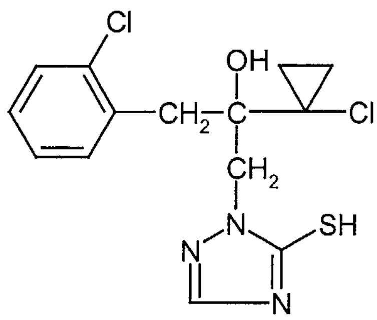

(VIIa)

vorliegen. Der Einfachheit halber wird jeweils nur die "Thiono"-Form aufgerührt.

Die in den erfindungsgemäßen Wirkstoffkombinationen neben dem 5,7-Dichlor-4-(4-fluor-phenoxy)-chinolin der Formel (I) außerdem vorhandenen fungiziden Komponenten sind ebenfalls bekannt. Im einzelnen werden die Wirkstoffe in den folgenden Publikationen beschrieben:

(2) Verbindung der Formel (III)
Pesticide Manual, 11th. Edition, Seite 1208

(3) Verbindung der Formel (IV)
Pesticide Manual, 11th. Edition, Seite 608

(4) Verbindung der Formel (V)
EP-A 0 339 418

(5) Verbindung der Formel (VI)
EP-A 0 472 996

(6) Verbindung der Formel (VII)
WO 96/16048

(7) Verbindung der Formel (VIII)
EP-A 0 882 043

(8) Verbindung der Formel (IX)
WO 97/06171

Die erfindungsgemäßen Wirkstoffkombinationen enthalten neben dem Wirkstoff der Formel (I) einen Wirkstoff von den Verbindungen der Gruppen (2) bis (8).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
1 bis 50 Gewichtsteile, vorzugsweise 2 bis 10 Gewichtsteile an Wirkstoff aus der Gruppe (2),
1 bis 50 Gewichtsteile, vorzugweise 2 bis 10 Gewichtsteile an Wirkstoff aus der Gruppe (3),
0,1 bis 10 Gewichtsteile, vorzugsweise 0,2 bis 5 Gewichtsteile an Wirkstoff aus der Gruppe (4),
0,1 bis 10 Gewichtsteile, vorzugsweise 0,2 bis 5 Gewichtsteile an Wirkstoff aus der Gruppe (5),
0,1 bis 10 Gewichtsteile, vorzugsweise 0,2 bis 5 Gewichtsteile an Wirkstoff aus der Gruppe (6),
0,05 bis 10 Gewichtsteile, vorzugsweise 0,1 bis 5 Gewichtsteile an Wirkstoff aus der Gruppe (7) und/oder
0,05 bis 10 Gewichtsteile, vorzugsweise 0,1 bis 5 Gewichtsteile an Wirkstoff aus der Gruppe (8).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Puccinia und Septoria, sowie zur Bekämpfung von Krankheiten im Weinbau, wie Uncinula, Plasmopara und Botrytis, und außerdem in dikotylen Kulturen zur Bekämpfung von Echten und Falschen Mehltaupilzen sowie Blattfleckenerregern.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby (Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht

## Beispiele

### Beispiel 1

**Sphaerotheca-Test (Gurke) / protektiv**

| | |
|---|---|
| Lösungsmittel: | 47 Gewichtsteile Aceton |
| Emulgator: | 3 Gewichtsteile Alkyl-Aryl-Polyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration, oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Sporensuspension von **Sphaerotheca fuliginea** inokuliert. Die Pflanzen werden dann bei ca. 23°C und einer relativen Luftfeuchtigkeit von ca. 70 % im Gewächshaus aufgestellt.

10 Tage nach der Inokulation erfolgt die Auswertung. Dabei bedeutet 0% ein Wirkungsgrad, der demjenigen der Kontrolle entspricht, während ein Wirkungsgrad von 100 % bedeutet, dass kein Befall beobachtet wird.

Wirkstoffe, Aufwandmengen und Versuchsergebnisse gehen aus der folgenden Tabelle hervor.

**Tabelle 1**

| Sphaerotheca-Test (Gurke) / protektiv | | |
|---|---|---|
| **Wirkstoff** | **Aufwand-menge an Wirkstoff in g/ha** | **Wir-kungs-grad in %** |
| Bekannt:<br>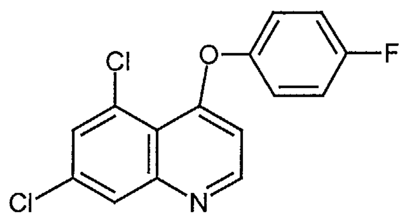<br>(I) | 10<br>5 | 63<br>57 |
| 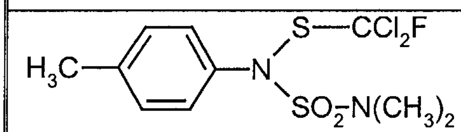 (III) | 50 | 0 |
| 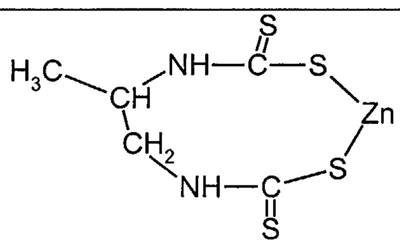<br>(IV) | 50 | 0 |

| Sphaerotheca-Test (Gurke) / protektiv | | | |
|---|---|---|---|
| **Wirkstoff** | **Aufwandmenge an Wirkstoff in g/ha** | **Wirkungsgrad in %** | |
| 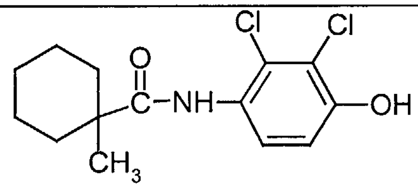 (V) | 10 | 0 | |
| 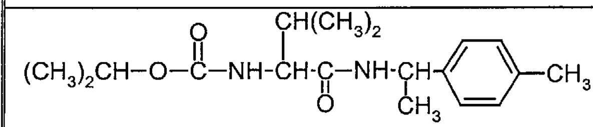 (VI) | 10 | 0 | |
| Erfindungsgemäß: | | gef. | ber.*) |
| (I) + (III) 1:5 | 10 + 50 | 93 | 63 |
| (I) + (IV) 1:5 | 10 + 50 | 87 | 63 |
| (I) + (V) 1:1 | 10 + 10 | 90 | 63 |
| (I) + (VI) 1:1 | 10 + 10 | 90 | 63 |

*) gef. = gefundener Wirkungsgrad
ber. = nach der Colby-Formel berechneter Wirkungsgrad

**Beispiel 2**

Phytophthora-Test (Tomate) / protektiv

Lösungsmittel: 47 Gewichtsteile Aceton
Emulgator: 3 Gewichtsteile Alkylarylpolyglykolether

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.
Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Sporensuspension von Phytophthora infestans inokuliert. Die Pflanzen werden dann in einer Inkubationskabine bei ca. 20°C und 100 % relativer Luftfeuchtigkeit aufgestellt.
3 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.
Wirkstoffe, Aufwandmengen und Versuchsergebnisse gehen aus der folgenden Tabelle hervor.

**Tabelle 2**

| Phytophthora-Test (Tomate) / protektiv | | | |
|---|---|---|---|
| **Wirkstoff** | **Aufwandmenge an Wirkstoff in g/ha** | **Wirkungsgrad in %** | |
| Bekannt:<br>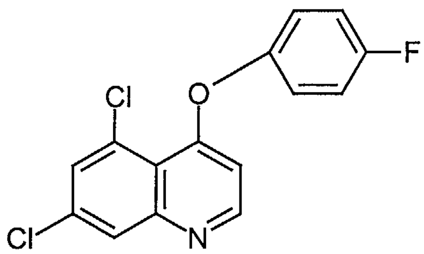<br>(I) | 5 | 4 | |
| 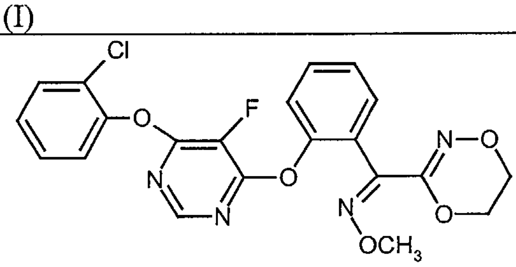<br>(VIII) | 5 | 45 | |
| Erfindungsgemäß: | | gef. | ber.*) |
| (I) + (VIII) 1:1 | 5 + 5 | 65 | 47 |

*) gef. = gefundener Wirkungsgrad

ber. = nach der Colby-Formel berechneter Wirkungsgrad

## Patentansprüche

1. Fungizide Mittel, **gekennzeichnet durch** einen Gehalt an einer Wirkstoffkombination, bestehend aus 5,7-Dichlor-4-(4-fluor-phenoxy)-chinolin der Formel

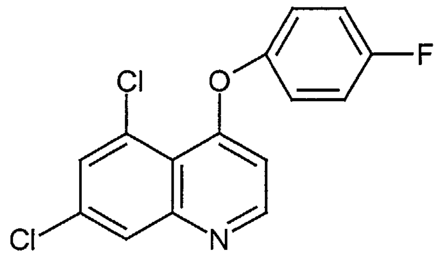

(I)

und

(2) dem N-Dichlor-fluor-methylthio-N',N'-dimethyl-N-p-tolylsulfamid der Formel

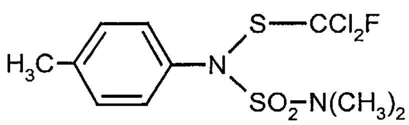

(III)

(Tolylfluanid)

oder

(3) dem Zink-propylen-1,2-bis-(dithiocarbamidat) der Formel

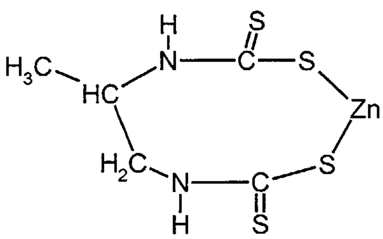

(IV)

(Propineb)

oder

(4) dem Anilin-Derivat der Formel

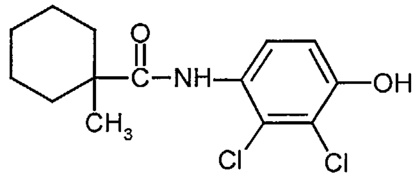

(V)

(Fenhexamid)

oder

(5) der Verbindung der Formel

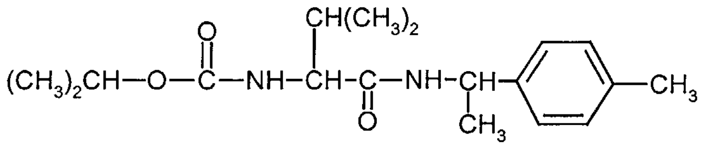

(VI)

(Iprovalicarb)

oder

(6) dem 2-[2-(1-Chlorcyclopropyl)-3-(2-chlorphenyl)-2-hydroxypropyl]-2,4-dihydro-[1,2,4]-triazol-3-thion der Formel

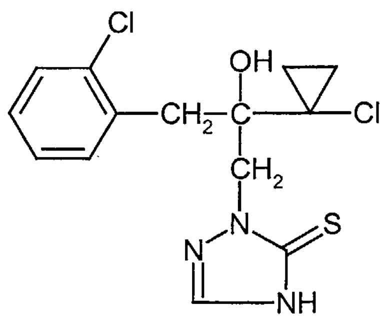

(VII)

oder

(7) der Verbindung der Formel

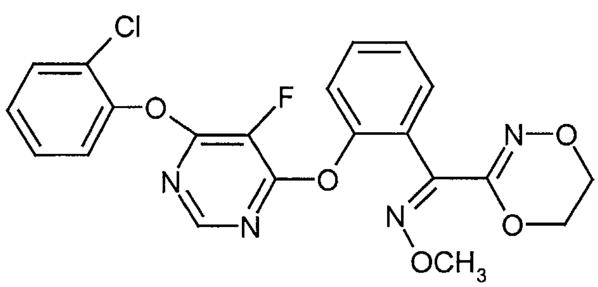

(VIII)

oder

(8) dem Benzimidazol-Derivat der Formel

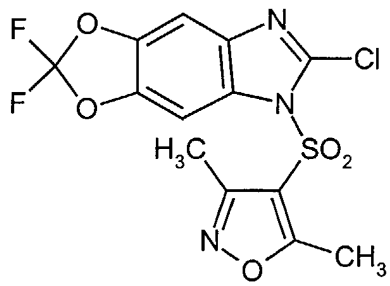

(IX)

neben Streckmitteln und/oder oberflächenaktiven Stoffen.

2. Mittel gemäß Anspruch 1, **dadurch gekennzeichnet, dass** in den Wirkstoffkombinationen das Gewichtsverhältnis von Wirkstoff der Formel (I) zu

- Wirkstoff der Gruppe (2) zwischen 1:1 und 1:50 liegt,
- Wirkstoff der Gruppe (3) zwischen 1:1 und 1:50 liegt,
- Wirkstoff der Gruppe (4) zwischen 1:0,1 und 1:10 liegt,
- Wirkstoff der Gruppe (5) zwischen 1:0,1 und 1:10 liegt,
- Wirkstoff der Gruppe (6) zwischen 1:0,1 und 1:10 liegt,
- Wirkstoff der Gruppe (7) zwischen 1:0,5 und 1:10 liegt und
- Wirkstoff der Gruppe (8) zwischen 1:0,5 und 1:10 liegt.

3. Verfahren zur Bekämpfung von Pilzen, **dadurch gekennzeichnet, dass** man Wirkstoffkombinationen gemäß Anspruch 1 auf die Pilze und/oder deren Lebensraum ausbringt.

4. Verwendung von Wirkstoffkombinationen gemäß Anspruch 1 zur Bekämpfung von Pilzen.

5. Verfahren zur Herstellung von fungiziden Mitteln, **dadurch gekennzeichnet, dass** man Wirkstoffkombinationen gemäß Anspruch 1 mit Streckmitteln und/oder oberflächenaktiven Stoffen vermischt.